# EUROPÄISCHE PATENTANMELDUNG

(11) **EP 4 656 831 A1**
(43) Veröffentlichungstag der Anmeldung: **03.12.2025**
(21) Anmeldenummer: 25171908.4
(22) Anmeldetag: 23.04.2025
(51) Int. Cl.: E05F 15/627

(54) **VORRICHTUNG ZUM AUFNEHMEN UND FREIGEBEN EINES SEILARTIGEN ZUGMITTELS**

(30) Priorität: 31.05.2024 DE 102024115224
(71) Anmelder: Stabilus GmbH, 56070 Koblenz (DE)
(72) Erfinder: Reif, Thomas, 56330 Kobern-Gondorf (DE)

(57) **Zusammenfassung**

Die vorliegende Erfindung betrifft eine Vorrichtung (10) zum Aufnehmen und Freigeben eines seilartigen Zugmittels (12), umfassend das Zugmittel (12), eine Aufnahmeeinheit (18), um das Zugmittel (12) aufzunehmen, eine Antriebseinheit (20), um die Aufnahmeeinheit (18) anzutreiben, ein Anschlagselement (24), welches an einer vorbestimmten Stelle mit dem Zugmittel (12) in einer zumindest axial zu einer Längserstreckung des Zugmittels (12) unverlagerbaren Weise verbunden ist, und ein Gegenanschlagselement (34), durch welches das Zugmittel (12) zumindest abschnittsweise hindurchgeführt ist und welches dazu eingerichtet ist, mit dem Anschlagselement (24) in Kontakt zu treten, wobei das Anschlagselement (24) mit der Aufnahmeeinheit (18) derart verbunden ist, dass, nachdem eine vorbestimmte Länge an Zugmittel (12) von der Aufnahmeeinheit (18) freigegeben worden ist und durch das Gegenanschlagselement (34) hindurchgeführt worden ist, das Anschlagselement (24) mit dem Gegenanschlagselement (34) in einer kraftübertragenden Weise in Kontakt tritt. Ferner betrifft die Erfindung eine entsprechende Fahrzeugklappenanordnung (42).

## Beschreibung

Die vorliegende Erfindung betrifft eine Vorrichtung zum Aufnehmen und Freigeben eines seilartigen Zugmittels.

Aus dem Stand der Technik sind Vorrichtungen zum Aufnehmen und Freigeben eines seilartigen Zugmittels bekannt, welche mit einem Ende des Zugmittels fest verbunden sind. Ist das Zugmittel vollständig von der Aufnahmeeinheit abgewickelt und es werden Zugkräfte in das Zugmittel eingeleitet, so übertragen sich diese Zugkräfte direkt auf die Aufnahmeeinheit. Das bedeutet wiederum, dass sowohl die Aufnahmeeinheit selbst als auch eine Verbindung der Aufnahmeeinheit mit einer übergeordneten Baugruppe, wie beispielsweise einer Fahrzeugklappe, stabil genug ausgebildet sein muss, um sämtlichen auftretenden Kräften beschädigungsfrei standhalten zu können. Dies führt zwangsläufig zu einer Steigerung an Größe und/oder Gewicht der Vorrichtung. Gerade im Automobilbau, in welchem aufgrund des stark begrenzten Bauraums, welcher für derartige Vorrichtungen zur Verfügung steht, Gewicht und Größe eine zentrale Rolle spielen, kann eine dahingehend optimierte Vorrichtung entscheidende Vorteile bringen.

Es ist daher die Aufgabe der vorliegenden Erfindung, eine Vorrichtung bereitzustellen, welche eine im Vergleich zum Stand der Technik vergleichbare Kraftübertragung bereitstellen kann und zugleich, insbesondere in Bezug auf Größe und/oder Gewicht, optimiert ausgebildet sein kann.

Diese Aufgabe wird gemäß der vorliegenden Erfindung durch eine Vorrichtung zum Aufnehmen und Freigeben eines seilartigen Zugmittels gelöst, wobei die Vorrichtung umfasst:
- das seilartige Zugmittel, welches dazu eingerichtet ist, Zugkräfte zu übertragen,
- eine Aufnahmeeinheit, welche dazu eingerichtet ist, das Zugmittel aufzunehmen, sodass eine sich von der Aufnahmeeinheit weg erstreckende freie Länge des Zugmittels verkürzt wird, oder dieses freizugeben, sodass eine sich von der Aufnahmeeinheit weg erstreckende freie Länge des Zugmittels verlängert wird,
- eine Antriebseinheit, insbesondere ein Elektromotor, welche dazu eingerichtet ist, die Aufnahmeeinheit anzutreiben,
- ein Anschlagselement, welches an einer vorbestimmten Stelle mit dem Zugmittel in einer zumindest axial zu einer Längserstreckung des Zugmittels unverlagerbaren Weise verbunden ist, und
- ein Gegenanschlagselement, durch welches das Zugmittel zumindest abschnittsweise hindurchgeführt ist und welches zu dazu eingerichtet ist, mit dem Anschlagselement in Kontakt zu treten,
wobei das Anschlagselement mit der Aufnahmeeinheit derart verbunden ist, dass, nachdem eine vorbestimmte Länge an Zugmittel von der Aufnahmeeinheit freigegeben worden ist und durch das Gegenanschlagselement hindurchgeführt worden ist, das Anschlagselement mit dem Gegenanschlagselement in einer kraftübertragenden Weise in Kontakt tritt.

Wird in dem Zustand, in welchem das Anschlagselement und das Gegenanschlagselement aneinander anliegen, eine Zugkraft in das Zugmittel eingeleitet, zum Beispiel dadurch, dass die vollständig geöffnete Fahrzeugklappe belastet wird, so wird die Zugkraft von dem Zugmittel über das Anschlagselement direkt in das Gegenanschlagselement eingeleitet. Das Gegenanschlagselement ist wiederum in einer kraftübertragenden Weise mit einer übergeordneten Baugruppe, beispielsweise einer Fahrzeugklappe oder einer Fahrzeugkarosserie, verbunden, sodass die Kräfte aus dem Gegenanschlagselement in diese übergeordneten Baugruppe eingeleitet werden können.

Wie aus dem voranstehend beschriebenen Kräfteverlauf zu erkennen ist, ist es durch die vorliegende Erfindung möglich, dass die Aufnahmeeinheit und/oder ein Gehäuse, welches die Aufnahmeeinheit umgibt, und/oder eine Befestigung der Aufnahmeeinheit an der übergeordneten Baugruppe keinen Bestandteil des Kräfteverlauf bilden/bildet, sodass sie/es im Wesentlichen nicht dazu eingerichtet sein muss, Kräften standzuhalten und diese weiterzuleiten, welche über das Zugmittel eingeleitet werden. Als Folge hiervon kann die Aufnahmeeinheit und/oder das Gehäuse und/oder die Befestigung der Aufnahmeeinheit an der übergeordneten Baugruppe mit deutlich weniger Materialaufwand ausgeführt sein, verglichen zu gleichen, aber kraftübertragenden, Komponenten, wodurch Gewicht und Kosten reduziert werden können.

Insbesondere kann das Anschlagselement mit einem Ende des Zugmittels verbunden sein. Dabei kann das Anschlagselement mit dem Zugmittel verschraubt, vernietet, vergossen, verklebt, verschweißt oder anderweitig kraftübertragend verbunden sein. Natürlich ist es auch denkbar, dass das Zugmittel an zwei Seiten aus dem Anschlagselement hervorsteht, wobei in diesem Fall nur an einer Seite Kräfte über das Zugmittel übertragen werden. Daher kann derjenige Abschnitt des Zugmittels, an welchem Kräfte aus dem Zugmittel ausgeleitet werden, als "Ende" des Zugmittels angesehen werden, ungeachtet der Tatsache, ob das Zugmittel physisch an dieser Stelle auch enden oder nicht. Grundsätzlich ist das Gesamtsystem auch als zweiseitige Anwendung mit zwei Vorrichtungen/Seilantrieben denkbar.

In einer vorteilhaften Ausführungsform der vorliegenden Erfindung kann die Aufnahmeeinheit eine Seilrolle umfassen, welche dazu eingerichtet ist, durch eine Rotation davon um eine Rotationsachse in einem ersten Drehsinn das Zugmittel auf die Seilrolle aufzuwickeln und durch eine Rotation davon um die Rotationsachse in einem zweiten Drehsinn das Zugmittel von der Seilrolle abzuwickeln und somit das Zugmittel von der Aufnahmeeinheit freizugeben. Das Aufwickeln und Freigeben des Zugmittels auf/von einer Seilrolle stellt eine besonders vorteilhafte Methode dar, das Zugmittel in einer wiederholbaren Art und Weise aufzunehmen und freizugeben, ohne dass sich das Zugmittel verknotet und so die Funktion der Vorrichtung gestört ist. Die Seilrolle kann dabei Ausnehmungen aufweisen, wie beispielsweise Nuten an der Außenseite der Seilrolle, welche dazu eingerichtet und dimensioniert sind, das Zugmittel darin aufzunehmen, insbesondere derart, dass in einer einzelnen Ausnehmung nur ein einzelner Abschnitt des Zugmittels angeordnet ist. Zum Beispiel kann eine durchgehende Ausnehmung angeordnet sein, welche in der Art eines Schraubengewindes an der Seilrolle verläuft.

Das Anschlagselement kann gelenkig, insbesondere um eine Schwenkachse schwenkbar, mit der Aufnahmeeinheit verbunden sein. Auf diese Weise kann sich das Zugmittel im Bereich des Anschlagselements einerseits knickfrei an eine Aufnahme für das Zugmittel an der Aufnahmeeinheit annähern und sich andererseits gemäß dem Verlauf des Zugmittels von der Aufnahmeeinheit weg ausrichten. Hierdurch können Beschädigungen des Zugmittels, zum Beispiel durch Knicken des Zugmittels im Bereich des Anschlagselements, vermieden werden.

In einem Zustand, in welchem das Zugmittel in der Aufnahmeeinheit aufgenommen ist, kann das Zugmittel an dem Anschlagselement, insbesondere an einer radial äußeren Seite davon, anliegen. Das heißt, das Anschlagselement kann an seiner radial äußeren Seite von einem Abschnitt des Zugmittels überlagert werden, wenn das Zugmittel entsprechend weit auf der Aufnahmeeinheit aufgenommen ist. So kann sich das Zugmittel zunächst von dem Anschlagselement weg zu einem Außenumfang der Aufnahmeeinheit hin erstrecken und dann am Außenumfang der Aufnahmeeinheit entlang verlaufen, wobei es nach etwa einer vollständigen Umschlingung der Aufnahmeeinheit radial außen zumindest teilweise über das Anschlagselement hinweg verläuft.

Ferner kann das Anschlagselement in Bezug auf einen Bereich der Aufnahmeeinheit, insbesondere in Bezug auf einen Außenumfang der Seilrolle, an welchem das Zugmittel aufgenommen wird, zumindest teilweise versenkbar angeordnet sein. Das Anschlagselement kann dabei so weit in der Aufnahmeeinheit versenkbar angeordnet sein, dass eine radial äußere Seite des Anschlagselements im Wesentlichen bündig mit einem das Anschlagselement umgebenden Abschnitt der Aufnahmeeinheit ist. Werden an einem Aufnahmebereich der Aufnahmeeinheit mehrere Wicklungen an Zugmittel nebeneinander (im Sinne einer ersten Lage an Zugmittel, welche zu einer Rotationsachse der Seilrolle einen im Wesentlichen konstanten ersten Abstand aufweist) angeordnet, so kann auch das Anschlagselement, insbesondere an seiner radial äußeren Seite, von einem Abschnitt des Zugmittels überlagert werden, ohne dass derjenige Abschnitt des Zugmittels, welcher das Anschlagselement überlagert, weiter nach radial außen vorsteht als ein Rest derselben Lage an Zugmittel. Ferner ist es denkbar, dass eine zweite solche Lage an Zugmittel radial außerhalb der ersten Lage und gegebenenfalls in Kontakt zu der ersten Lage angeordnet werden kann, wobei die zweite Lage ebenfalls zu der Rotationsachse der Seilrolle einen im Wesentlichen konstanten zweiten Abstand aufweist.

Vorteilhafterweise kann das Gegenanschlagselement eine Zugmittelführung aufweisen, welche durch das Gegenanschlagselement hindurch verläuft, wobei die Kontur der Zugmittelführung im Wesentlichen L-förmig ist. Die Zugmittelführung kann in deren Umfangsrichtung betrachtet zumindest teilweise, insbesondere vollständig, geschlossen ausgebildet sein.

Dabei kann sich ein Schenkel der L-Form der Zugmittelführung in einer Richtung parallel zu einer Rotationsachse der Aufnahmeeinheit erstrecken und der andere Schenkel kann sich im Wesentlichen orthogonal dazu und orthogonal zu einer Längserstreckung des Zugmittels im Bereich der Zugmittelführung erstrecken. Damit kann der sich parallel zu der Rotationsachse der Aufnahmeeinheit erstreckende Schenkel dazu eingerichtet sein, einer Seitwärtsverlagerung des Zugmittels beim Freigeben von der Aufnahmeeinheit, zum Beispiel einem Abwickeln von der Seilrolle, zu entsprechen beziehungsweise diese zu ermöglichen. Der dazu orthogonal verlaufende Schenkel der L-Form kann dazu ausgelegt sein, eine Verlagerung der Zugmittel-Ausrichtung von einem Verlauf, welcher relativ zu der Seilrolle im Wesentlichen tangential verläuft, zu einem Verlauf zu ermöglichen, welchen das Zugmittel einnimmt, wenn es vollständig freigegeben (von der Seilrolle abgewickelt) ist und das Anschlagselement an dem Gegenanschlagselement anliegt.

Das Gegenanschlagselement kann eine Gegenanschlagsfläche aufweisen, welche derart ausgerichtet und bemessen ist, dass beim Anliegen des Anschlagselements an dem Gegenanschlagselement ein Flächenkontakt zwischen der Gegenanschlagsfläche und einer Anschlagsfläche, welche an dem Anschlagselement ausgebildet ist, entsteht.

Beispielsweise beträgt der Flächenkontakt mindestens 80%, insbesondere mindestens 90%, vorteilhafterweise in etwa 100% der Anschlagsfläche des Anschlagselements. Grundsätzlich ist der Flächenkontakt von der erforderlichen Abstützkraft und damit der Flächenpressung abhängig. Hierbei soll natürlich ein makroskopischer Kontakt betrachtet werden, welcher mit bloßem Auge erkennbar ist. Ferner sollen Unebenheiten beziehungsweise Unparallelitäten, welche sich zum Beispiel durch Fertigungstoleranzen und eine jeweilige Materialbeschaffenheit ergeben können, außer Acht bleiben. Durch einen solchen Flächenkontakt kann eine besonders günstige Kraftübertragung von dem Anschlagselement in das Gegenanschlagselement erreicht werden.

Zu diesem Zweck kann die Anschlagsfläche des Anschlagselements an einer Stirnseite des Anschlagselements ausgebildet sein, insbesondere derjenigen Stirnfläche, an welcher das Zugmittel mit dem Anschlagselement verbunden ist. Das bedeutet, dass eine in das Zugmittel eingeleitete Zugkraft unmittelbar zu einer Anpresskraft von Anschlagselement und Gegenanschlagselement führen kann. Da das Zugmittel so einen im Wesentlichen geraden Verlauf einnehmen kann, kann dieses vor Beschädigungen geschützt werden.

Insbesondere kann die Vorrichtung ferner ein Federelement umfassen, insbesondere eine Spiralfeder, welches dazu eingerichtet ist, die Aufnahmeeinheit derart vorzubelasten, dass eine Spannung des Zugmittels aufrechterhalten bleibt bzw. nach einem Abnehmen der Spannung des Zugmittels wieder hergestellt wird. Wird zum Beispiel die Fahrzeugklappe händisch schneller geschlossen als es der motorische Antrieb durchführen kann, so kann das Zugmittel spannungsfrei werden und gegebenenfalls durchhängen. Um nun zu vermeiden, dass das Zugmittel zwischen der Fahrzeugklappe und einem weiteren Bereich des Fahrzeugs eingeklemmt werden kann, wird das Zugmittel aufgrund der Wirkung des Federelements, vorzugsweise in Kombination mit einem Freilauf in der Seilrolle für diese Drehrichtung, in der Aufnahmeeinheit aufgenommen.

In diesem Zusammenhang, aber nicht darauf beschränkt, kann es vorteilhaft sein, dass die Aufnahmeeinheit einen Freilauf umfassen kann, welcher dazu eingerichtet ist, eine relative Bewegung, insbesondere Drehung, einer ersten Unterbaugruppe der Aufnahmeeinheit, welche mit der Antriebseinheit in Wirkverbindung steht, relativ zu einer zweiten Unterbaugruppe der Aufnahmeeinheit, welche mit dem Zugmittel verbunden ist, in wenigstens einer Richtung, insbesondere in wenigstens einem Drehsinn, vorteilhafterweise in demjenigen Drehsinn, in welchem das Zugmittel in die Aufnahmeeinheit aufgenommen wird, zu ermöglichen. Zum Beispiel kann somit das Federelement das Zugmittel auf die Aufnahmeeinheit aufnehmen, insbesondere auf die Seilrolle aufwickeln, obwohl die Antriebseinheit stillsteht oder sich zumindest bei einer geringeren Geschwindigkeit bewegt.

Gemäß einem weiteren Aspekt betrifft die vorliegende Erfindung eine Fahrzeugklappenanordnung, welche eine Fahrzeugklappe, insbesondere ein Dropgate, und eine erfindungsgemäße Vorrichtung zum Aufnehmen und Freigeben eines seilartigen Zugmittels umfasst,
wobei die Fahrzeugklappe relativ zu einer Fahrzeugkarosserie beweglich, insbesondere schwenkbar verbunden ist,
wobei das Zugmittel die Vorrichtung, in dem Fall, in welchem die Vorrichtung an der Fahrzeugklappe angeordnet ist, mit der Fahrzeugkarosserie und in dem Fall, in welchem die Vorrichtung an der Fahrzeugkarosserie angeordnet ist, mit der Fahrzeugklappe verbindet.

Als Dropgate wird in der Regel die am Heck der Fahrzeugkarosserie angebrachte Fahrzeugklappe bezeichnet.

Bereits an dieser Stelle sei darauf hingewiesen, dass sämtliche mit Bezug auf die erfindungsgemäße Vorrichtung beschriebenen Merkmale, Effekte und Vorteile auch auf die erfindungsgemäße Fahrzeugklappenanordnung Anwendung finden können, und umgekehrt.

So kann beispielsweise bei der Fahrzeugklappenanordnung gemäß der vorliegenden Erfindung eine Längserstreckung der Zugmittelführung, insbesondere eine Längserstreckung desjenigen Schenkels der L-Form, welcher sich in einer Richtung parallel zu einer Rotationsachse der Aufnahmeeinheit erstreckt, zu einer Hauptfläche, insbesondere einer Innenseite, der Fahrzeugklappe im Wesentlichen orthogonal angeordnet sein. Auch die Rotationsachse der Aufnahmeeinheit, insbesondere der Seilrolle, kann im Wesentlichen orthogonal zu einer Hauptfläche, insbesondere einer Innenseite, der Fahrzeugklappe angeordnet sein. Dies kann zu einer besonders platzsparenden Anordnung der Vorrichtung zum Aufnehmen und Freigeben eines seilartigen Zugmittels in der Fahrzeugklappe oder in der Fahrzeugkarosserie führen.

Des Weiteren kann die Fahrzeugklappenanordnung ferner eine Umlenkrolle umfassen, deren Rotationsachse relativ zu einer Ebene, welche zu der Rotationsachse der Aufnahmeeinheit normal ausgerichtet ist, einen Winkel zwischen 0 und 22,5°, insbesondere von etwa 22,5° aufweist. Dies kann es ermöglichen, dass das Zugmittel, von der Aufnahmeeinheit aus betrachtet, mittig in eine Nut der Umlenkrolle läuft, dann die Umlenkrolle um einen vorbestimmten Winkel umschließt, zum Beispiel um ca. 90°, und dann die Umlenkrolle derart verlässt, dass das Zugmittel in einer geschlossenen Stellung der Fahrzeugklappe an der Karosserie über eine erste Seitenflanke der Umlenkrolle von dieser wegführt, dass das Zugmittel in einer vollständig geöffneten Stellung der Fahrzeugklappe an der Karosserie über eine zweite Seitenflanke der Umlenkrolle von dieser wegführt, und dass das Zugmittel in einer Mittelstellung der Fahrzeugklappe an der Karosserie, welche mittig zwischen der vollständig geöffneten und der geschlossen Stellung angeordnet ist, über die Nut der Umlenkrolle von dieser wegführt. Insbesondere kann die Rotationsachse der Umlenkrolle relativ zu der Rotationsachse der Aufnahmeeinheit derart angeordnet sein, dass sich diese nicht schneiden.

Die vorliegende Erfindung wird nachfolgend anhand eines Ausführungsbeispiels in größerem Detail mit Bezug auf die begleitenden Zeichnungen beschrieben werden. Es stellt dar:
- Figur 1: eine Ausführungsform der erfindungsgemäßen Vorrichtung mit aufgenommenem Zugmittel;
- Figur 2: eine Seitenansicht der Vorrichtung aus Figur 1 mit teilweise freigegebenem Zugmittel;
- Figur 3: eine Seitenansicht der Vorrichtung aus Figur 1 mit nahezu vollständig freigegebenem Zugmittel;
- Figur 4: eine Seitenansicht der Vorrichtung aus Figur 1 mit vollständig freigegebenem Zugmittel;
- Figur 5: eine Detailansicht der Vorrichtung aus Figur 1;
- Figur 6: eine Seitenansicht der Vorrichtung aus Figur 1 in einem teilweise geschnittenen Zustand;
- Figur 7: eine perspektivische Ansicht einer erfindungsgemäßen Fahrzeugklappenanordnung; und
- Figur 8: ein Flussdiagramm von möglichen Handlungsabläufen beim Öffnen/Schließen der Fahrzeugklappenanordnung.

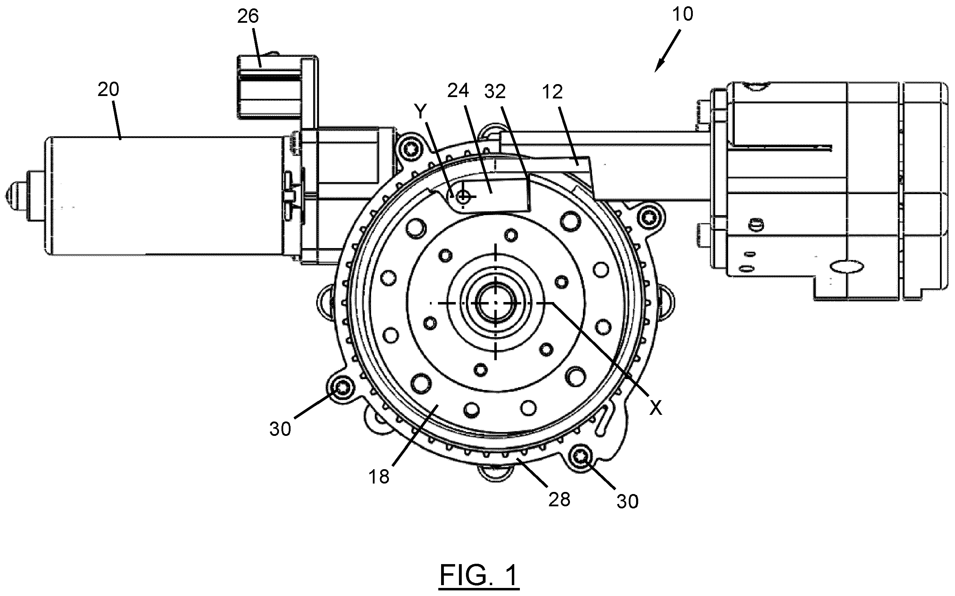

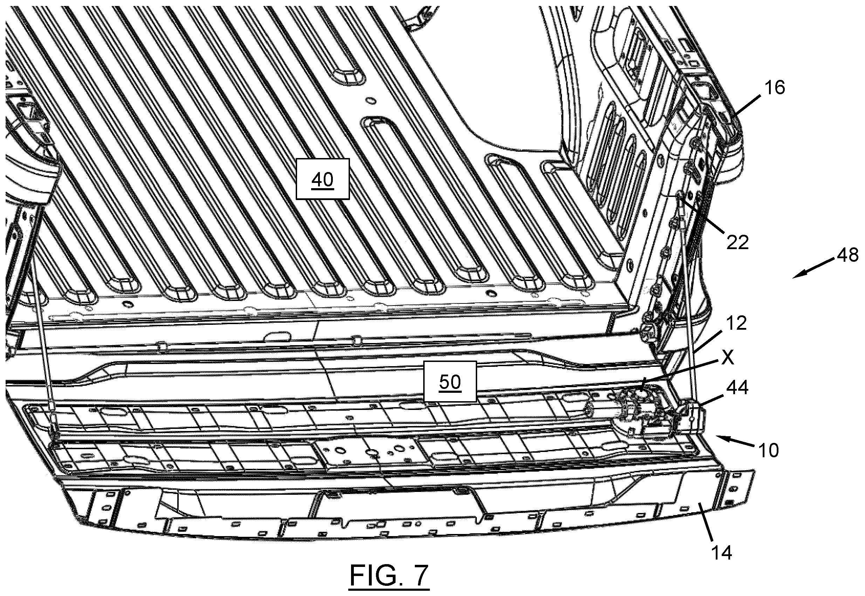

**In** Figur 1 ist eine erfindungsgemäße Vorrichtung zum Aufnehmen und Freigeben eines seilartigen Zugmittels allgemein mit dem Bezugszeichen 10 bezeichnet. Die Vorrichtung 10 umfasst das seilartige Zugmittel 12, wobei das Zugmittel 12 zwischen einer Fahrzeugklappe 14 und einer Fahrzeugkarosserie 16 verläuft (siehe Figur 7) und wobei das Zugmittel 12 dazu eingerichtet ist, Zugkräfte zu übertragen, sodass die Fahrzeugklappe 14 relativ zu der Fahrzeugkarosserie 16 bewegt beziehungsweise verschwenkt werden kann und in einer vorbestimmten Öffnungsstellung relativ zu der Fahrzeugkarosserie 16 gehalten werden kann.

Das Zugmittel 12 ist in der in Figur 1 gezeigten Situation vollständig auf einer Aufnahmeeinheit 18 aufgenommen, welche in dem hier dargestellten Ausführungsbeispiel als Seilrolle 18 ausgebildet ist, sodass das Zugmittel 12 die Seilrolle 18 mehrfach in Wicklungen umschlingt, welche im Sinne einer ersten Lage des Zugmittels 12 an der Seilrolle 18 in einer Richtung betrachtet, welche zu einer Rotationsachse X der Seilrolle 18 parallel verläuft, nebeneinander angeordnet sind. Generell ist es auch denkbar, dass diese erste Lage an Zugmittel 12 radial außen, in einer zu der Rotationsachse X radialen Richtung betrachtet, wiederum von Abschnitten des Zugmittels 12 (im Sinne einer zweiten Lage an Zugmittel 12) überdeckt ist.

Um die Seilrolle 18 rotatorisch um die Rotationsachse X anzutreiben, weist die Vorrichtung 10 ferner eine Antriebseinheit 20 auf, welche hier als ein Elektromotor 20 ausgebildet ist und über eine entsprechende Getriebeeinheit (nicht dargestellt) mit der Seilrolle 18 in Wirkverbindung steht.

Wie bereits weiter oben erwähnt, ist das Zugmittel 12 mit seinem einen Längsende 22 mit der Karosserie 16 verbunden. An seinem anderen Längsende ist das Zugmittel 12 mit einem Anschlagselement 24 verbunden, welches um eine Schwenkachse Y schwenkbar an der Seilrolle 18 angebracht ist.

Die in Figur 1 dargestellte Situation des vollständig aufgenommenen Zugmittels 12 entspricht einer vollständig geschlossenen Fahrzeugklappe 14 an der Fahrzeugkarosserie 16.

In Figur 1 ist ferner zu erkennen, dass der Antriebseinheit 20 ein Stecker 26 zugeordnet ist, welcher als Anschluss für ein elektrisches Kabel dient, über welches der Antriebseinheit 20 Strom und gegebenenfalls Steuersignale zugeführt werden können. Ferner ist zu erkennen, dass die Aufnahmeeinheit 18 (hier die Seilrolle 18) in einem Gehäuse 28 aufgenommen ist, welches über Verbindungsmittel 30 mit der Fahrzeugklappe 14 verbunden ist (siehe Figur 7). Dabei sei erwähnt, dass es natürlich ebenfalls denkbar ist, dass die Vorrichtung 10 mit der Fahrzeugkarosserie 16 verbunden ist und das freie Ende 22 des Zugmittels 12 an der Fahrzeugklappe 14 angebracht ist.

Das Anschlagselement 24 ist in der Situation gemäß Figur 1 in einer Aufnahme 32 vollständig versenkt angeordnet, sodass es radial außen von einem Abschnitt des Zugmittels 12 überlagert werden kann, ohne dass es zu einer Auslenkung des Zugmittels 12 nach radial außen an dieser Stelle kommen würde. Die Form der Ausnehmung 32 entspricht hier im Wesentlichen der Kontur des Anschlagselements 24.

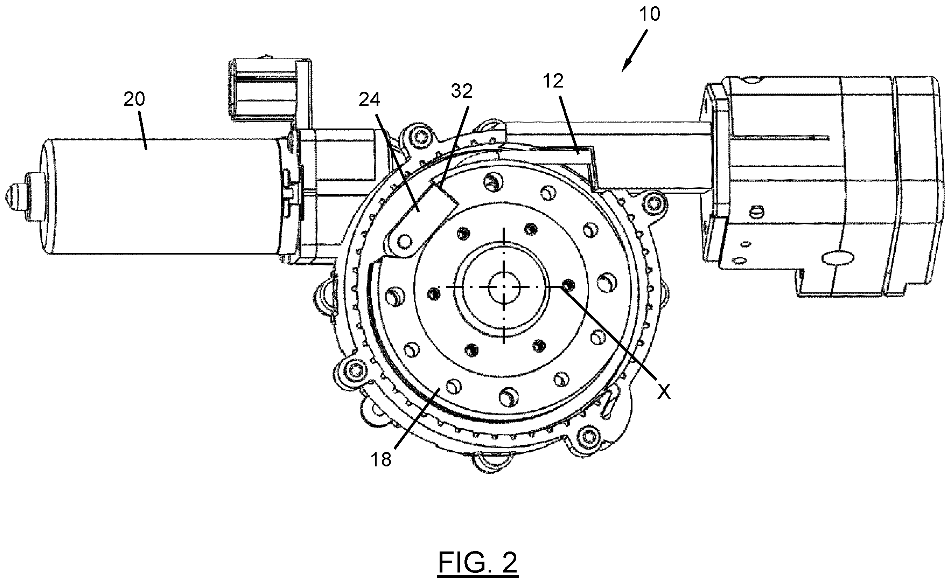

Mit Bezug nun auf Figur 2 ist zu erkennen, dass das Zugmittel 12 weitestgehend von der Seilrolle 18 abgewickelt worden ist. Dennoch verlässt das Zugmittel 12 die Seilrolle 18 noch im Wesentlichen tangential zu einem Außenumfang der Seilrolle 18, analog zu der Situation gemäß Figur 1. Ebenso analog zu der Situation gemäß Figur 1 ist auch in der Situation gemäß Figur 2 das Anschlagselement 24 so weit wie möglich in der Aufnahme 32 versenkt angeordnet.

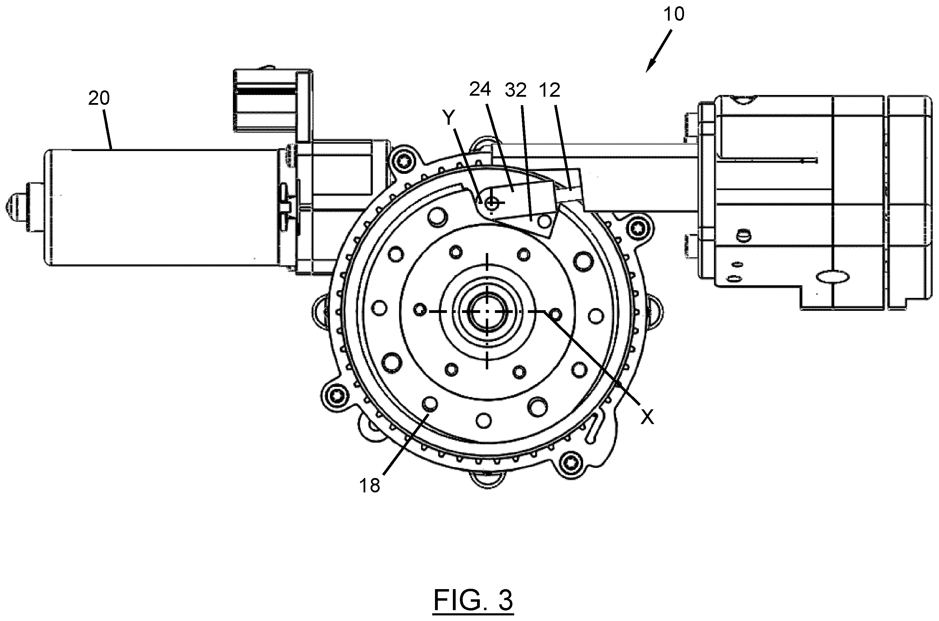

Wird die Seilrolle 18 nun weiter durch die Antriebseinheit 20 um die Rotationsachse X derart angetrieben, dass das Zugmittel 12 noch weiter freigegeben wird, das heißt, dass die Fahrzeugklappe 14 noch weiter geöffnet wird, so beginnt sich das Anschlagselement 24 durch eine Schwenkbewegung um die Schwenkachse Y aus der Aufnahme 32 herauszuheben. In diesem Zustand gemäß Figur 3 verläuft das Zugmittel 12 nicht mehr tangential zu der Seilrolle 18, sondern geradlinig auf die Schwenkachse Y zu, welche weiter radial innen angeordnet ist als ein Außenumfang der Seilrolle 18. Dieses Herausheben des Anschlagselements 24 aus der Aufnahme 32 findet selbstständig dadurch statt, dass entsprechend viel Zugmittel 12 von der Seilrolle 18 abgewickelt worden ist.

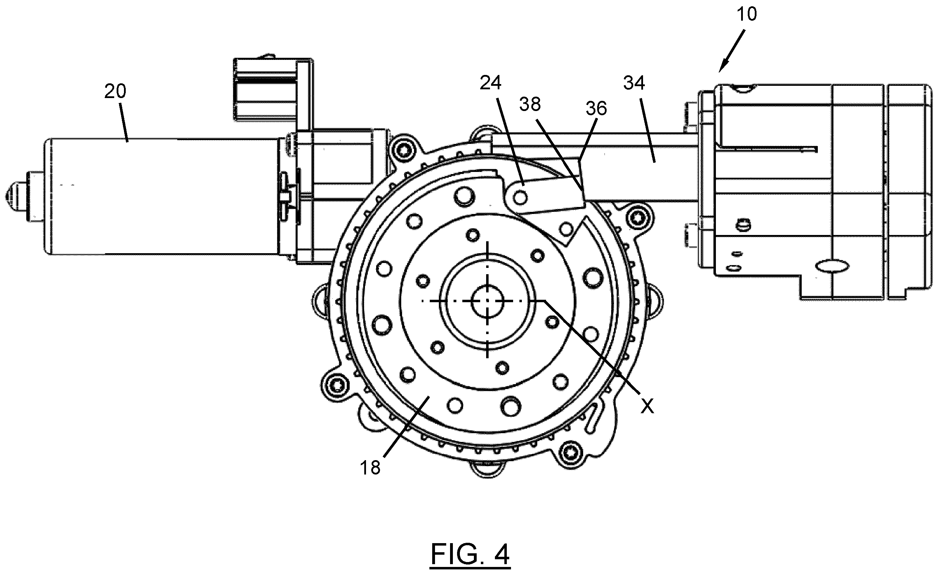

In der Situation gemäß Figur 4, in welcher das Zugmittel 12 vollständig freigegeben worden ist, das heißt die Fahrzeugklappe 14 vollständig relativ zu der Fahrzeugkarosserie 16 geöffnet ist, schlägt das Anschlagselement 24 an einem Gegenanschlagselement 34 an, wobei das Gegenanschlagselement 34 eine Gegenanschlagsfläche 36 aufweist, welche derart ausgerichtet ist, dass ein Flächenkontakt zwischen dem Gegenanschlagselement 34 beziehungsweise der Gegenanschlagsfläche 36 und dem Anschlagselement 24 beziehungsweise einer an dem Anschlagselement 24 ausgebildeten Anschlagsfläche 38 entsteht. Durch diesen Flächenkontakt können auch höhere Zugkräfte zwischen den beiden Elementen 24 und 34 übertragen werden, ohne dass es zu einer Beschädigung kommt.

In dieser vollständig geöffneten Stellung der Fahrzeugklappe 14, welche der Situation gemäß Figur 4 der Vorrichtung 10 entspricht, resultiert eine Belastung der Fahrzeugklappe 14 in einem Kraftverlauf, welcher von der Fahrzeugklappe 14 in das Gegenanschlagselement 34, welches mit der Fahrzeugklappe 14 kraftübertragend verbunden ist, beispielsweise durch Verbindung mit einer in Figur 7 nicht dargestellten Seitenwand der Fahrzeugklappe 14, und über den Flächenkontakt der Gegenanschlagsfläche 36 mit der Anschlagsfläche 38 des Anschlagelements 34 in das Zugmittel 12 eingeleitet wird. Über das Zugmittel 12 beziehungsweise dessen Längsende 22, welches mit der Fahrzeugkarosserie 16 verbunden ist, wird die Zugkraft dann in die Fahrzeugkarosserie 16 abgeführt. Wie zu erkennen ist, findet kein Kraftverlauf aus dem Anschlagselement 24 über die Schwenkverbindung mit der Seilrolle 18 in die Seilrolle 18 statt, sodass die Seilrolle 18 selbst und damit verbundene Komponenten, wie beispielsweise eine Lagerung der Seilrolle 18, entsprechend materialsparend ausgeführt werden können, da diese nur den Belastungen während dem Öffnungs- und Schließvorgang der Heckklappe 14 standhalten müssen, jedoch nicht den Belastungen, welche üblicherweise auftreten, wenn die Fahrzeugklappe 14 vollständig geöffnet ist, wie beispielsweise ein Beladen der Ladefläche 40 des in Figur 7 teilweise gezeigten Fahrzeugs oder einem Betreten der Fahrzeugklappe 14 durch Personen.

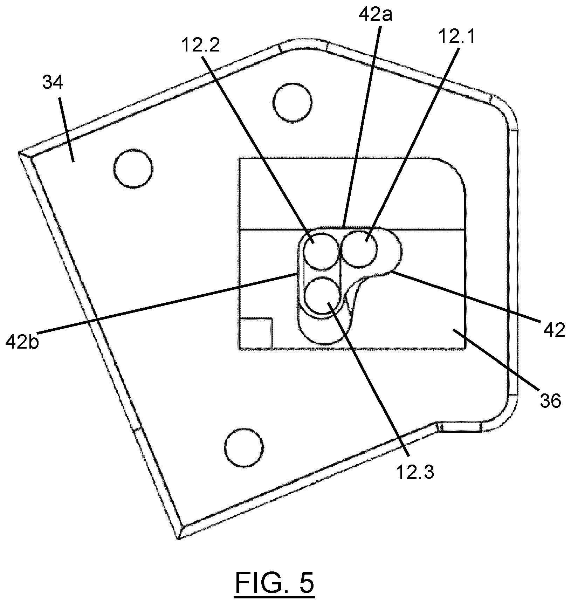

In Figur 5 ist das Gegenanschlagselement 34 in einer Detailansicht dargestellt, welche einer Blickrichtung in den Figuren 1 bis 4 von links nach rechts entspricht.

Dabei ist zu erkennen, dass das Gegenanschlagselement 34 eine Zugmittelführung 42 aufweist, durch welche hindurch das Zugmittel 12 durch das Gegenanschlagselement 34 hindurchtritt. **In** Figur 5 sind drei Anordnungszustände 12.1, 12.2 und 12.3 des Zugmittels 12 überlagert dargestellt, welche nachfolgend beschrieben werden. Der Zustand 12.1 des Zugmittels 12 entspricht der Situation gemäß Figur 1, in welcher das Zugmittel 12 vollständig auf die Seilrolle 18 aufgewickelt worden ist und in welcher das Zugmittel 12 die Seilrolle 18 im Wesentlichen tangential verlässt. Wird das Zugmittel 12 nun von der Seilrolle 18 abgewickelt, so wandert derjenige Punkt, an welchem das Zugmittel 12 die Seilrolle 18 im Wesentlichen tangential verlässt aufgrund der schraubengewindeartigen Wicklungen des Zugmittels 12 um die Seilrolle 18 entlang einer Richtung, welche zu der Rotationsachse X der Seilrolle 18 im Wesentlichen parallel verläuft. Dieser Zustand, bei welchem die nebeneinander verlaufenden Wicklungen des Zugmittels 12 an der Seilrolle 18 abgewickelt sind, in welchem das Zugmittel 12 den Außenumfang der Seilrolle 18 aber noch im Wesentlichen tangential verlässt, ist in Figur 2 gezeigt und entspricht dem Zustand 12.2 des Zugmittels 12 in Figur 5. Wird das Zugmittel 12 nun aus dieser Stellung bis zu der vollständig freigegebenen Stellung weiter von der Seilrolle 18 abgewickelt, so beginnt sich das Anschlagselement 24 aus der Ausnehmung 32 herauszuheben und zugleich verändert sich der Verlauf des Zugmittels 12 relativ zu der Seilrolle 18 von dem im Wesentlichen tangentialen Verlauf zu einem den Außenumfang der Seilrolle 18 schneidenden Verlauf hin, wie dies in den Figur 3 und 4 gezeigt ist. **In** dieser Phase des Freigebens des Zugmittels 12 von der Seilrolle 18 verändert sich der Verlauf des Zugmittels 12 also nicht parallel zu der Rotationsachse X (entsprechend der Zustandsänderung des Zugmittels 12 von 12.1 zu 12.2 gemäß Figur 5), sondern ändert sich in einer dazu im Wesentlichen orthogonalen Richtung (entsprechend der Veränderung des Zustands des Zugmittels 12 von 12.2 nach 12.3 in Figur 5). Der Zustand 12.3 entspricht dann der vollständig freigegebenen Stellung des Zugmittels 12, in welcher das Anschlagselement 24 und das Gegenanschlagselement 34 aneinander anliegen.

Bezogen auf die Zugmittelführung 42 kann diese derart beschrieben werden, dass sie im Wesentlichen L-förmig ist, wobei ein erster Schenkel 42a der L-Form eine Erstreckung aufweist, welche im Wesentlichen parallel zu der Rotationsachse X der Aufnahmeeinheit 18 verläuft, und wobei ein zweiter Schenkel 42b der L-Form eine Erstreckung aufweist, welche windschief, aber, in Projektionsrichtung entlang eines kürzesten Abstands der beiden Achsen zueinander betrachtet, im Wesentlichen orthogonal zu der Rotationsachse X der Seilrolle 18 verläuft. Auf diese Weise kann die Zugmittelführung 42 die weiter oben beschriebenen Verlagerungen des Zugmittels 12 relativ zu der Aufnahmeeinheit 18 ermöglichen, ohne dass das Zugmittel 12 an der Zugmittelführung 42 maßgeblich umgelenkt werden muss, wodurch eine erhöhte Abnutzung oder gar eine Beschädigung des Zugmittels 12 auftreten könnte.

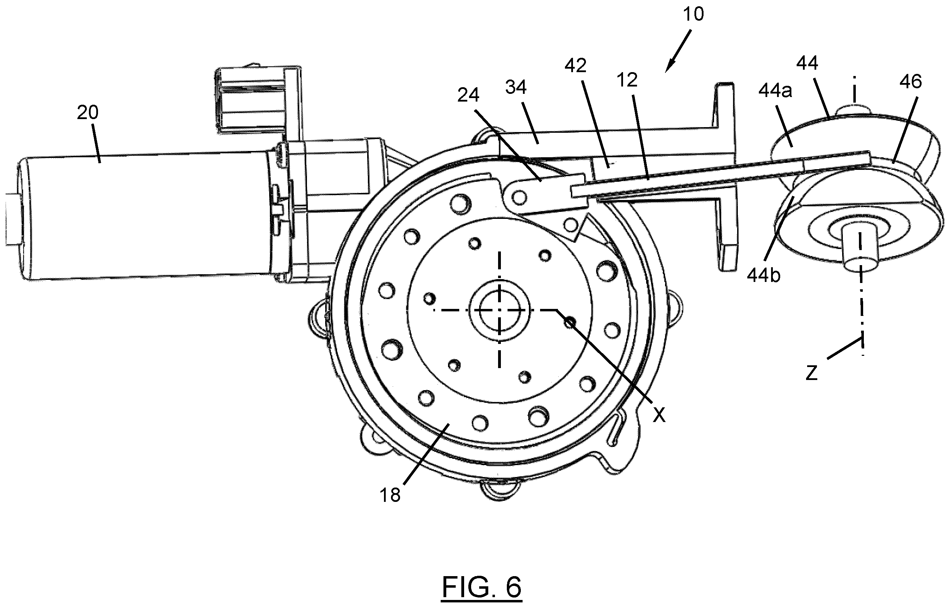

In Figur 6 ist gezeigt, dass das Zugmittel 12 nach dem Verlassen des Gegenanschlagselements 34 auf eine Umlenkrolle 44 (siehe auch Figur 7) auflaufen kann. Die Umlenkrolle 44 dient dabei dazu, den Verlauf des Zugmittels 12 derart umzulenken, dass dieses auf die Fahrzeugkarosserie 16 zu verläuft, um mit dieser verbunden werden zu können.

Dabei ist zu erkennen, dass eine Rotationsache Z der Umlenkrolle 44 zu einer Ebene, auf welche die Rotationsachse X der Aufnahmeeinheit 18 normal steht (diese Ebene entspricht in Figur 6 der Blattebene), gewinkelt angeordnet ist. Dieser Winkel kann insbesondere 22,5° betragen. Auf diese Weise kann das Zugmittel 12 von der Aufnahmeeinheit 18 her kommend in eine Nut 46 der Umlenkrolle 44 einlaufen, dann die Umlenkrolle 44 um einen vorbestimmten Winkel umschließen (siehe Figur 7) und anschließend die Umlenkrolle über eine erste Seitenflanke 44a oder über eine zweite Seitenflanke 44b verlassen. So kann beispielsweise das Zugmittel 12 in der vollständig geöffneten Stellung der Fahrzeugklappe 14 die Umlenkrolle 44 über deren erste Seitenflanke 44a verlassen und in einem vollständig geschlossenen Zustand der Fahrzeugklappe 14 an der Fahrzeugkarosserie 16 kann das Zugmittel 12 die Umlenkrolle 44 über deren zweite Seitenflanke 44b verlassen. In einer Mittelstellung der Fahrzeugklappe 14, welche im Wesentlichen mittig zwischen der vollständig geöffneten und der geschlossenen Stellung der Fahrzeugklappe 12 relativ zu der Fahrzeugkarosserie 16 angeordnet ist, kann das Zugmittel 12 sowohl von der Aufnahmeeinheit 18 her kommend in die Nut 46 der Umlenkrolle 44 einlaufen als auch die Umlenkrolle 44 über die Nut 46 nach entsprechender Umschlingung wieder verlassen. Hierbei kann ein Winkel unter welchem das Zugmittel 12 die Umlenkrolle 44 über die entsprechende Seitenflanke 44a oder 44b relativ zu deren Rotationsachse Z verlässt in der vollständig geöffneten Stellung der Fahrzeugklappe 14 relativ zu der Fahrzeugkarosserie 16 als auch in der geschlossenen Stellung der Fahrzeugklappe 14 an der Fahrzeugkarosserie 16 im Wesentlichen gleich, jedoch vorzeichenverschieden, sein.

In Figur 7 ist eine erfindungsgemäße Fahrzeugklappenanordnung 48 gezeigt. In der hier gezeigten Ausführungsform ist die Vorrichtung 10 an der Fahrzeugklappe 14 angeordnet. Die Fahrzeugklappe 14 befindet sich in Figur 7 in der vollständig geöffneten Stellung relativ zu der Fahrzeugkarosserie 16, sodass das das Anschlagselement 24 und das Gegenanschlagselement 34 aneinander anliegen. Die Rotationsachse X der Aufnahmeeinheit 18 steht hier im Wesentlichen orthogonal zu einer Hauptfläche 50 der Fahrzeugklappe 14, wobei die Hauptfläche 50 hier eine Innenseite der Fahrzeugklappe 14 ist, das heißt eine Seite, welche in der vollständig geöffneten Stellung der Fahrzeugklappe 14 im Wesentlichen nach oben weist. Das Zugmitten 12 erstreckt sich von der Aufnahmeeinheit 18 zu der Umlenkrolle 44 im Wesentlichen in einer Breitenrichtung der Fahrzeugklappe 14.

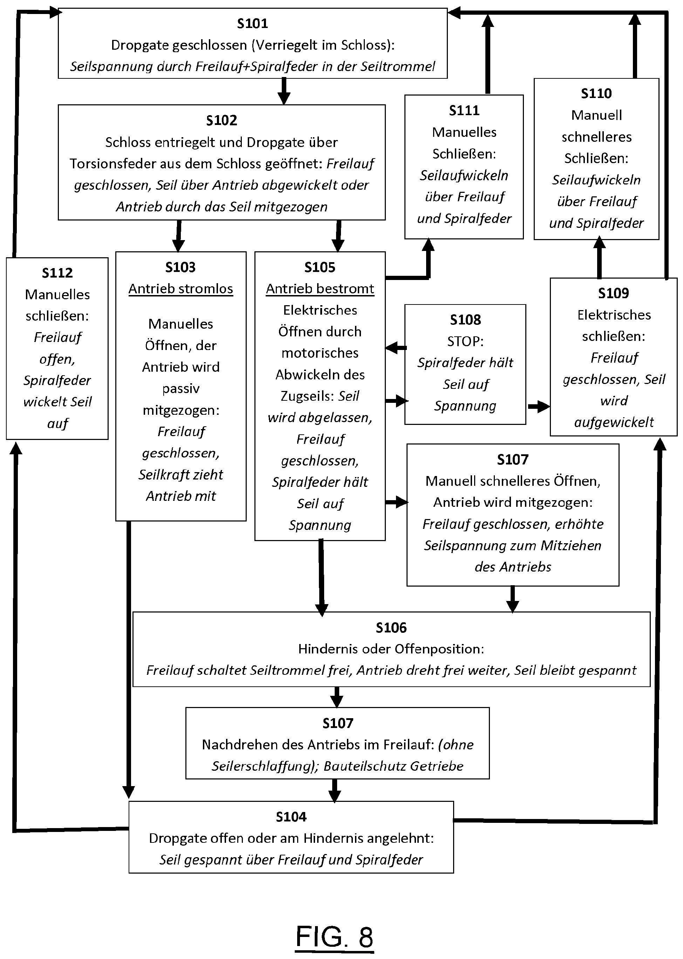

In Figur 8 ist ein Flussdiagramm dargestellt, welches mögliche Handlungsabläufe beim Öffnen/Schließen der Klappenanordnung 48 darstellt.

Ausgehend von einem geschlossenen Dropgate, das heißt, dass die Fahrzeugklappe / das Dropgate der Klappenanordnung 48 in einem Schloss an der Fahrzeugkarosserie 16 verriegelt ist (Schritt S101 in Figur 8), wird in dieser geschlossenen Stellung die Seilspannung durch den Freilauf und ein Federelement (beispielsweise eine Spiralfeder) in der Seiltrommel bzw. Seilrolle 18 erzeugt. Wird das Schloss entriegelt und das Dropgate über die Wirkung beispielsweise einer Torsionsfeder aus der Schließstellung heraus verlagert, so wird der Freilauf in seiner Sperrrichtung rotiert, das heißt der Freilauf wird geschlossen, und das Seil bzw. Zugmittel 12 wird von der Seilrolle 18 über den Antrieb (Antriebseinheit 20) abgewickelt oder, falls der Antrieb die Seilrolle 18 in Relation zu der Verlagerung des Dropgates nicht ausreichend schnell zum Abwickeln des Zugmittels 12 rotiert, wird der Antrieb über das Zugmittel 12 durch die Verlagerung des Dropgates mitgezogen (Schritt S102).

In einem ersten Fall von Schritt S103 wird der Antrieb stromlos betätigt, das heißt die Fahrzeugklappe wird manuell geöffnet und der Antrieb wird passiv mitgezogen. Dabei verbleibt der Freilauf geschlossen und der Antrieb wird über die Seilkraft betätigt. Ist das Dropgate am Ende seiner Verlagerung in der offenen Stellung angekommen oder wurde in einer Zwischenstellung angehalten, beispielsweise durch Kontakt mit einem Hindernis, bleibt das Zugmittel 12 über den Freilauf und die Spiralfeder gespannt (Schritt S104).

In einem zweiten Fall (Schritt S105) wird der Antrieb zum Antreiben der Seilrolle 18 aktiv betätigt. In diesem Fall wird die Fahrzeugklappe durch das Abwickeln des Zugmittels 12 von der Seilrolle 18 auf Grund der Wirkung des Antriebs geöffnet. Das heißt, das Zugmittel 12 wird abgelassen, der Freilauf ist geschlossen und die Spiralfeder hält das Zugmittel 12 auf Spannung. Erreicht das Dropgate nun die offene Position oder liegt, wie oben beschrieben, gegen ein Hindernis an (Schritt S106), schaltet der Freilauf die Seilrolle 18 frei, so dass der Antrieb frei weiterdreht und das Zugmittel 12 dadurch gespannt bleibt. In einem darauf folgenden Schritt S107 kann der Antrieb im Freilauf nach drehen, wodurch Komponenten des Getriebes des Antriebs geschützt werden können, ohne dass es zu einer maßgeblichen Abnahme der Seilspannung kommt.

Anschließend verläuft der Handlungsablauf zu dem oben erwähnten Schritt S104, in welchem das Zugmittel 12 über den Freilauf und die Spiralfeder gespannt wird.

Alternativ zu dem Schritt S106, kann beim aktiven Betreiben des Antriebs, um das Dropgate zu öffnen (Schritt S105), das Dropgate zusätzlich derart manuell in Richtung der offenen Position verlagert werden, dass eine Geschwindigkeit des manuellen Öffnens die Geschwindigkeit der motorischen Antriebsgeschwindigkeit des Antriebs übersteigt. In diesem Fall wird der Freilauf geschlossen und der Antrieb wird durch das manuelle Verlagern des Dropgates mitgezogen. Dabei kann es zu einer erhöhten Seilspannung kommen. Anschließend folgt der oben beschriebene Schritt S106.

Ferner kann ein aktives Betätigen des Antriebs und damit ein Antrieb der Seilrolle 18 auch aktiv gestoppt werden (Schritt S108), bevor die Fahrzeugklappe die offene Position erreicht hat oder mit einem Hindernis in Kontakt getreten ist. Wie auch während des Abwickelns des Zugmittels 12, wird auch hier das Zugmittel 12 durch die Spiralfeder auf Spannung halten. Anschließend kann das aktive Antreiben des Antriebs (Schritt S105) fortgesetzt werden oder aber das Dropgate kann manuell weiter geöffnet werden (Schritt S103) (in Figur 8 nicht dargestellt). Alternativ kann der Antrieb in einem Schritt S109 derart angetrieben werden, dass das Dropgate durch die Wirkung des Antriebs, das heißt ein durch ein motorisches Aufwickeln des Zugmittels 12 auf die Seilrolle 18, in Richtung seiner geschlossenen Stellung verlagert wird. Dabei wird der Freilauf geschlossen und das Zugmittel 12 wird auf die Seilrolle 18 aufgewickelt. Am Ende des Verlagerungswegs erreicht das Dropgate wieder seine Schließstellung gemäß dem eingangs beschriebenen Schritt S101.

Auch beim Schließen des Dropgates unter der Wirkung des Antriebs, analog zu dem motorischen Öffnen des Dropgates, kann auch hier händisch derart auf die Fahrzeugklappe eingewirkt werden, dass eine Verlagerungsgeschwindigkeit der Fahrzugklappe in Richtung der Schließstellung diejenige Geschwindigkeit übersteigt, mit welcher der Antrieb das Zugmittel 12 auf die Seilrolle 18 aufgewickelt. In diesem Fall wird eine nachlassende Seilspannung über den Freilauf und die Spiralfeder kompensiert, so dass das Zugmittel 12 mit einer größeren Geschwindigkeit auf die Seilrolle 18 aufgewickelt werden kann, als es die Wirkung des Antriebs alleine zulassen würde (Schritt S110). Anschließend kehrt der Handlungsablauf zu dem Schritt S101 zurück, wenn das Dropgate seine Schließstellung erreicht hat.

Natürlich kann dieses manuelle Schließen auch ohne ein vorheriges Aktivieren des Antriebs, um das Dropgate zu schließen, stattfinden, zum Beispiel direkt, während der Antrieb noch in der Öffnungsrichtung des Dropgates betätigt wird. Analog zu Schritt S110, wird auch in diesem Fall das Zugmittel 12 über den Freilauf und die Spiralfeder auf die Seilrolle 18 aufgewickelt, so dass ein Durchhängen des Zugmittel 12 verhindert werden kann.

In vielen Fällen wird das Dropgate in seine geöffnete Position verlagert werden (Schritt S104), um beispielsweise Objekte auf eine Ladefläche eines Pick-Ups zu laden, und dem Schritt S104 folgend wird das Dropgate dann entweder elektrisch geschlossen (Schritt S109) oder manuell geschlossen (Schritt S112), wobei in dem Schritt S112 der Freilauf geöffnet wird und die Spiralfeder das Zugmittel 12 auf die Seilrolle 18 aufgewickelt. Anschließend erreicht das Dropgate wieder seine geschlossene Stellung (S101).

Natürlich kann der Schritt S112 auch direkt auf den Schritt S108 folgen (in Figur 8 nicht dargestellt).

Das Federelement (beispielsweise eine Spiralfeder) kann vorzugsweise immer eine Federvorspannung aufweisen, die niedrigste Federvorspannung bei aufgewickeltem Zugmittel 12 und geschlossener Fahrzeugklappe, die höchste Federvorspannung bei abgewickeltem Zugmittel 12 und geöffneter Fahrzeugklappe. Um dieses resultierende Schließmoment aus der Spiralfeder an der Fahrzeugklappe kompensieren zu können, wird anfangs eine Torsionsfeder mit einem Öffnungsmoment an der Fahrzeugklappe und bei größerem Öffnungswinkel der Fahrzeugklappe dann das resultierende Öffnungsmoment aus der Klappenschwerpunktslage (minus dem jetzt aber dann schließenden Torsionsfedermoment) benötigt, um weiterhin die Spiralfeder abzuwickeln.

Der Freilauf kann insbesondere innen in der Seilrolle 18 angeordnet sein und eine elektromotorisch angetriebene Seiltrommelachse bzw. Seilrollenachse mit der Seilrolle 18 verbinden. Wird die Seilrollenachse in der Aufwickelrichtung des Zugmittels 12 elektromotorisch angetrieben, ist das die Sperrrichtung des Freilaufs und die äußere Seilrolle 18 wird mitgenommen, dreht sich ebenfalls in der Aufwickelrichtung des Zugmittels 12 und wickelt das Zugmittel 12 auf, d.h. die Fahrzeugklappe schließt.

Steht die Fahrzeugklappe offen und die Seilrollenachse wird nicht elektromotorisch in der Aufwickelrichtung des Zugmittels 12 angetrieben, sondern die Fahrzeugklappe wird manuell geschlossen, reduziert sich die Seilspannung, der Freilauf ist in dieser Drehrichtung offen und die Seilrolle 18 kann durch die Spiralfedervorspannung getrieben, frei in der Aufwickelrichtung des Zugmittels 12 drehen und das Zugmittel 12 auf Spannung halten bzw. aufwickeln.

Selbst wenn man das Zugmittel 12 an der Fahrzeugklappe aushängt, um zum Beispiel das Dropgate zu demontieren, wird das Zugmittel 12 aufgrund der Spiralfedervorspannung versuchen, sich vollständig auf die Seilrolle 18 aufzulegen. Das Zugmittel 12 will sozusagen in den Antrieb verschwinden und muss zum erneuten Einhängen an der Fahrzeugklappe wieder gegen die Spiralfederkraft händisch aus dem Antrieb heraus gezogen werden.

Der Freilauf in dieser Anordnung kann im Prinzip gleichzeitig vier Zustände aufweisen, welche immer abhängig sind von der Drehrichtung der äußeren Seilrolle 18 zur inneren angetriebenen Seilrollenachse und von der Geschwindigkeit und Größe der Seilspannung der äußeren Seilrolle 18 zu der inneren Seilachse.

Diese Zustände sind:
1. Seilrollenachse angetrieben in der Aufwickelrichtung des Zugmittels 12, Seilrollenachse dreht schneller als Seilrolle 18, Freilauf ist geschlossen, Seilrolle 18 wird mit Drehzahl der Seilrollenachse mitgenommen, Zugmittel 12 wickelt auf, Fahrzeugklappe schließt;
2. Seilrollenachse angetrieben in der Aufwickelrichtung des Zugmittels 12, Seilrollenachse dreht langsamer (oder steht) als Seilrolle 18 (zum Beispiel gibt ein schnelles manuelles Klappenschließen eine hohe Seilrollendrehzahl), Freilauf öffnet, Seilrolle 18 dreht schneller als Seilrollenachse (durch die Spiralfeder), Zugmittel 12 wird schnell aufgewickelt, Seilspannung bleibt immer erhalten;
3. Seilrollenachse angetrieben in der Abwickelrichtung des Zugmittels 12, Seilspannung durch Öffnungsmoment an der Fahrzeugklappe ausreichend hoch, Freilauf geschlossen, der Seilrolle 18 wird mit der Geschwindigkeit der Seilrollenachse in der Abwickelrichtung des Zugmittels 12 das Abwickeln des Zugmittels 12 erlaubt. Auch bei noch so hohem Öffnungsmoment Fahrzeugklappe=Seilkraft, kann die Seilrolle 18 nicht schneller abwickeln als mit der Geschwindigkeit der Seilrollenachse, Freilauf ist zu, "motorisch gebremste Öffnungsgeschwindigkeit"
4. Seilrollenachse angetrieben in der Abwickelrichtung des Zugmittels 12, Seilspannung durch Öffnungsmoment an der Fahrzeugklappe zu gering (z.B. wird die Fahrzeugklappe am Öffnen gehindert), bei fehlendem Öffnungsmoment und so stark reduzierter Seilspannung überwiegt die Spiralfeder, welche aufwickeln will, Freilauf öffnet, die Seilrolle 18 wird stehen bleiben und bei Bedarf in der Aufwickelrichtung des Zugmittels 12 bis zu der zu der Spiralfederkraft gehörenden Seilspannung aufwickeln, selbst während die Seilrollenachse in der Abwickelrichtung des Zugmittels 12 motorisch angetrieben wird.

## Patentansprüche

1. Vorrichtung (10) zum Aufnehmen und Freigeben eines seilartigen Zugmittels (12), wobei die Vorrichtung (10) umfasst:
- das seilartige Zugmittel (12), welches dazu eingerichtet ist, Zugkräfte zu übertragen,
- eine Aufnahmeeinheit (18), welche dazu eingerichtet ist, das Zugmittel (12) aufzunehmen, sodass eine sich von der Aufnahmeeinheit (18) weg erstreckende freie Länge des Zugmittels (12) verkürzt wird, oder dieses freizugeben, sodass eine sich von der Aufnahmeeinheit (18) weg erstreckende freie Länge des Zugmittels (12) verlängert wird,
- eine Antriebseinheit (20), insbesondere ein Elektromotor (20), welche dazu eingerichtet ist, die Aufnahmeeinheit (18) anzutreiben,
- ein Anschlagselement (24), welches an einer vorbestimmten Stelle mit dem Zugmittel (12) in einer zumindest axial zu einer Längserstreckung des Zugmittels (12) unverlagerbaren Weise verbunden ist, und
- ein Gegenanschlagselement (34), durch welches das Zugmittel (12) zumindest abschnittsweise hindurchgeführt ist und welches dazu eingerichtet ist, mit dem Anschlagselement (24) in Kontakt zu treten, wobei das Anschlagselement (24) mit der Aufnahmeeinheit (18) derart verbunden ist, dass, nachdem eine vorbestimmte Länge an Zugmittel (12) von der Aufnahmeeinheit (18) freigegeben worden ist und durch das Gegenanschlagselement (34) hindurchgeführt worden ist, das Anschlagselement (24) mit dem Gegenanschlagselement (34) in einer kraftübertragenden Weise in Kontakt tritt.

2. Vorrichtung (10) nach Anspruch 1,
**dadurch gekennzeichnet, dass** das Anschlagselement (24) mit einem Ende des Zugmittels (12) verbunden ist.

3. Vorrichtung (10) nach einem der vorhergehenden Ansprüche,
**dadurch gekennzeichnet, dass** die Aufnahmeeinheit (18) eine Seilrolle (18) umfasst, welche dazu eingerichtet ist, durch eine Rotation davon um eine Rotationsachse (X) in einem ersten Drehsinn das Zugmittel (12) auf die Seilrolle (18) aufzuwickeln und durch eine Rotation davon um die Rotationsachse (X) in einem zweiten Drehsinn das Zugmittel (12) von der Seilrolle (18) abzuwickeln und somit das Zugmittel (12) von der Aufnahmeeinheit (18) freizugeben.

4. Vorrichtung (10) nach einem der vorhergehenden Ansprüche,
**dadurch gekennzeichnet, dass** das Anschlagselement (24) gelenkig, insbesondere um eine Schwenkachse (Y) schwenkbar, mit der Aufnahmeeinheit (18) verbunden ist.

5. Vorrichtung (10) nach einem der vorhergehenden Ansprüche,
**dadurch gekennzeichnet, dass** in einem Zustand, in welchem das Zugmittel (12) in der Aufnahmeeinheit (18) aufgenommen ist, das Zugmittel (12) an dem Anschlagselement (24), insbesondere an einer radial äußeren Seite davon, anliegt.

6. Vorrichtung (10) nach einem der vorhergehenden Ansprüche, und gegebenenfalls nach Anspruch 3,
**dadurch gekennzeichnet, dass** das Anschlagselement (24) in Bezug auf einen Bereich der Aufnahmeeinheit (18), insbesondere in Bezug auf einen Außenumfang der Seilrolle (18), an welchem das Zugmittel (12) aufgenommen wird, zumindest teilweise versenkbar angeordnet ist.

7. Vorrichtung (10) nach einem der vorhergehenden Ansprüche,
**dadurch gekennzeichnet, dass** das Gegenanschlagselement (34) eine Zugmittelführung (42) aufweist, welche durch das Gegenanschlagselement (34) hindurch verläuft, wobei die Kontur der Zugmittelführung (42) im Wesentlichen L-förmig ist.

8. Vorrichtung (10) nach dem vorhergehenden Anspruch,
**dadurch gekennzeichnet, dass** sich ein Schenkel (42a) der L-Form der Zugmittelführung (42) in einer Richtung parallel zu einer Rotationsachse (X) der Aufnahmeeinheit (18) erstreckt und sich der andere Schenkel (42b) im Wesentlichen orthogonal dazu und orthogonal zu einer Längserstreckung des Zugmittels (12) im Bereich der Zugmittelführung (42) erstreckt.

9. Vorrichtung (10) nach einem der vorhergehenden Ansprüche,
**dadurch gekennzeichnet, dass** das Gegenanschlagselement (34) eine Gegenanschlagsfläche (36) aufweist, welche derart ausgerichtet und bemessen ist, dass beim Anliegen des Anschlagselements (24) an dem Gegenanschlagselement (34) ein Flächenkontakt zwischen der Gegenanschlagsfläche (36) und einer Anschlagsfläche (38), welche an dem Anschlagselement (24) ausgebildet ist, entsteht.

10. Vorrichtung (10) nach dem vorhergehenden Anspruch,
**dadurch gekennzeichnet, dass** die Anschlagsfläche (38) des Anschlagselements (24) an einer Stirnseite des Anschlagselements (24) ausgebildet ist, insbesondere derjenigen Stirnfläche, an welcher das Zugmittel (12) mit dem Anschlagselement (24) verbunden ist.

11. Vorrichtung (10) nach einem der vorhergehenden Ansprüche,
**dadurch gekennzeichnet, dass** die Vorrichtung (10) ferner ein Federelement umfasst, insbesondere eine Spiralfeder, welches dazu eingerichtet ist, die Aufnahmeeinheit (18) derart vorzubelasten, dass eine Spannung des Zugmittels (12) aufrechterhalten bleibt bzw. nach einem Abnehmen der Spannung des Zugmittels (12) wieder hergestellt wird.

12. Vorrichtung (10) nach einem der vorhergehenden Ansprüche,
**dadurch gekennzeichnet, dass** die Aufnahmeeinheit (18) einen Freilauf umfasst, welcher dazu eingerichtet ist, eine relative Bewegung, insbesondere Drehung, einer ersten Unterbaugruppe der Aufnahmeeinheit (18), welche mit der Antriebseinheit (20) in Wirkverbindung steht, relativ zu einer zweiten Unterbaugruppe der Aufnahmeeinheit (18), welche mit dem Zugmittel (12) verbunden ist, in wenigstens einer Richtung, insbesondere in wenigstens einem Drehsinn, vorteilhafterweise in demjenigen Drehsinn, in welchem das Zugmittel (12) in die Aufnahmeeinheit (18) aufgenommen wird, zu ermöglichen.

13. Fahrzeugklappenanordnung (42), welche eine Fahrzeugklappe (14), insbesondere ein Dropgate (14), und eine Vorrichtung (10) zum Aufnehmen und Freigeben eines seilartigen Zugmittels (12) nach einem der vorhergehenden Ansprüche umfasst,
wobei die Fahrzeugklappe (14) relativ zu einer Fahrzeugkarosserie (16) beweglich, insbesondere schenkbar, verbunden ist,
wobei das Zugmittel (12) die Vorrichtung (10), in dem Fall, in welchem die Vorrichtung (10) an der Fahrzeugklappe (14) angeordnet ist, mit der Fahrzeugkarosserie (16) und in dem Fall, in welchem die Vorrichtung (10) an der Fahrzeugkarosserie (16) angeordnet ist, mit der Fahrzeugklappe (14) verbindet.

14. Fahrzeugklappenanordnung (42) nach dem vorhergehenden Anspruch, soweit abhängig von Anspruch 7,
**dadurch gekennzeichnet, dass** eine Längserstreckung der Zugmittelführung (42), insbesondere eine Längserstreckung desjenigen Schenkels (42a) der L-Form, welcher sich in einer Richtung parallel zu einer Rotationsachse (X) der Aufnahmeeinheit (18) erstreckt, zu einer Hauptfläche (50), insbesondere einer Innenseite (50), der Fahrzeugklappe (14) im Wesentlichen orthogonal angeordnet ist.

15. Fahrzeugklappenanordnung (42) nach einem der Ansprüche 13 oder 14, **dadurch gekennzeichnet, dass** die Fahrzeugklappenanordnung (42) ferner eine Umlenkrolle (44) umfasst, deren Rotationsachse (Z) relativ zu einer Ebene, welche zu der Rotationsachse (X) der Aufnahmeeinheit (18) normal ausgerichtet ist, einen Winkel von etwa 22,5° aufweist.
